(19) Europäisches Patentamt / European Patent Office / Office européen des brevets

(11) **EP 3 236 080 B1**

(12) **EUROPEAN PATENT SPECIFICATION**

(45) Date of publication and mention
of the grant of the patent:
**02.10.2019  Bulletin 2019/40**

(51) Int Cl.:
*F04D 29/10* *(2006.01)*       *F16J 15/34* *(2006.01)*
*F16J 15/40* *(2006.01)*

(21) Application number: **15878877.8**

(22) Date of filing: **15.10.2015**

(86) International application number:
**PCT/JP2015/079193**

(87) International publication number:
**WO 2016/117188 (28.07.2016 Gazette 2016/30)**

(54) **ROTARY MACHINE SYSTEM**

DREHMASCHINENSYSTEM

SYSTÈME DE MACHINE TOURNANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **23.01.2015   JP 2015011666**

(43) Date of publication of application:
**25.10.2017   Bulletin 2017/43**

(73) Proprietor: **Mitsubishi Heavy Industries
Compressor Corporation
Minato-ku
Tokyo 108-0014 (JP)**

(72) Inventors:
• **EGAMI, Ryo
Tokyo 108-8215 (JP)**
• **KANEKO, Takeshi
Tokyo 108-8215 (JP)**

• **YOKOO, Kazutoshi
Tokyo 108-8215 (JP)**
• **SHAKUDA, Masaki
Hiroshima-shi
Hiroshima 733-8553 (JP)**
• **HAYASHI, Masahiro
Hiroshima-shi
Hiroshima 733-8553 (JP)**
• **TAKEDA, Tomoaki
Hiroshima-shi
Hiroshima 733-8553 (JP)**

(74) Representative: **Studio Torta S.p.A.
Via Viotti, 9
10121 Torino (IT)**

(56) References cited:
**JP-A- 2001 107 891     JP-A- 2012 082 765
JP-A- 2015 501 903     JP-B2- 3 500 355**

**Description**

[Technical Field]

The present invention relates to a rotary machine system.

[Background Art]

In a rotary machine such as a centrifugal compressor, there is a rotary shaft of which an end protrudes to an outside of a casing to input or output a rotational force of a rotary shaft rotatably provided in the casing. In this case, it is necessary to prevent leakage of a working fluid in the casing to the outside of the casing and infiltration of foreign substances or the like into the casing from the outside thereof through a gap between the rotary shaft and a shaft insertion hole formed in the casing for the rotary shaft to pass through the casing. Therefore, a gas seal portion is provided between the rotary shaft and the casing.

The gas seal portion includes a rotary ring and a stationary ring. The rotary ring is provided integrally with the rotary shaft on an outer circumferential portion of the rotary shaft. The stationary ring is fixed to the casing and is provided to face the rotary ring in an axial direction of the rotary shaft. The stationary ring is pressed toward the rotary ring by a coil spring or the like. Therefore, in a state in which the rotary machine is stopped, the stationary ring and the rotary ring abut on each other. In addition, a spiral groove is formed on a surface of the rotary ring facing the stationary ring. When the rotary machine is operated and the rotary shaft rotates, a seal gas is introduced between the rotary ring and the stationary ring by the spiral groove. Due to the pressure of the gas, the stationary ring is pressed in the axial direction of the rotary shaft against a biasing force of the coil spring. As a result, a minute gap is formed between the rotary ring and the stationary ring. The seal gas is caused to flow through the gap from an inside of the rotary machine toward an outside thereof through the gap, and thus sealing between the rotary shaft and the casing is achieved. In this case, the pressure of the seal gas is higher than the pressure inside and outside the rotary machine.

In such a gas seal portion, the seal gas flowing from the inside of the rotary machine to the outside thereof via the gap between the rotary ring and the stationary ring is discharged to an outside through a vent (chimney) connected to the casing.

A gas or the like discharged from equipment other than the rotary machine may be delivered into the vent and may be discharged to the outside together with the seal gas. Further, depending on a type of the gas, the gas may be burned near an outlet of the vent. When the gas or the like is delivered into the vent from the equipment other than the rotary machine or the gas is burned, a pressure in the vent is increased. When the pressure in the vent becomes higher than that of the inside of the machine, the seal gas flows backward in the gap between the rotary ring and the stationary ring. Then, the rotary ring and the stationary ring may collide with each other, and thus the gas seal portion may be damaged.

Patent Document 1 discloses a constitution which includes a flow rate switch for detecting a flow rate of a gas leaking from the gas seal portion to the vent. Accordingly, when the working gas leaks due to breakage of the gas seal portion and the flow rate of the gas at the vent is increased, an abnormality is detcted.

However, the constitution disclosed in Patent Document 1 is for detecting the breakage of the gas seal portion due to a backflow or the like of the seal gas from the vent to the gas seal portion as the abnormality. That is, it is not for preventing the breakage of the gas seal portion by suppressing the backflow of the seal gas.

Therefore, the pressure of the seal gas is usually controlled so that the pressure of the seal gas in the gas seal portion is reliably maintained at a higher level than the pressure of the vent inside and outside the rotary machine.

Patent Document 2 discloses a seal device of an oxygen compressor wherein a controller regulates the opening of a flow rate adjusting valve of a trunk seal gas feeding pipe so that a difference between the seal gas supply pressure and an oxygen suction pressure of the compressor lies in a range of 2-3 kPa.

[Citation List]

[Patent Literature]

[Patent Document 1] Japanese Patent No. 3979091
[Patent Document 2] Japanese Patent Application No. 2012082765

[Summary of Invention]

[Technical Problem]

However, in a pipe constituting a supply line for feeding the seal gas to the gas seal portion, pressure loss occurs. Even if the seal gas is delivered from a supply side of the seal gas with a pressure higher than the pressure inside the vent and the pressure inside the rotary machine, the pressure of the seal gas is lowered by the pressure loss in the supply line when the seal gas reaches the gas seal portion.

Also, the pressure of the gas in the vent which is discharged through the vent is varied by combustion of the gas delivered from the equipment other than the rotary machine or the gas in the vent. Even if the variation is taken into consideration, it is necessary to keep the pressure of the seal gas in the gas seal portion high.

Therefore, the pipe is formed as thick as possible so that the pressure loss is suppressed and the pressure of the seal gas is kept high. However, a cost is increased as the pipe becomes thicker.

Also, the magnitude of the pressure loss to be generated can be variously varied depending on conditions such as a pipe diameter, a piping layout, a pressure of a working fluid in a compressor and so on. Therefore, actually, whenever the rotary machine is installed, it is necessary to set an optimum pipe diameter according to various conditions at an installation position thereof, which is accompanied with effort and cost.

The present invention provides a rotary machine system which is capable of suppressing a piping cost, a design cost and a designing effort for supplying a seal gas while suppressing a backflow of the seal gas.

[Solution to Problem]

In order to achieve the aforementioned objects, there is provided a rotary machine system of a first aspect of the present invention including a rotary machine having a gas seal portion, a gas seal device connected to the rotary machine and configured to supply a seal gas to the gas seal portion, and a connecting pipe configured to connect the gas seal portion and the gas seal device, wherein the rotary machine includes a casing through which a working fluid flows, a rotary shaft configured to pass through an inside and an outside of the casing and provided to be rotatable, and the gas seal portion provided between the casing and the rotary shaft and configured to seal the working fluid by the seal gas having a supply pressure higher than that of the working fluid in the casing, and the gas seal device includes a seal gas supply pipe through which the seal gas delivered to the connecting pipe flows, a pressure regulating valve provided in the seal gas supply pipe and configured to adjust the supply pressure of the seal gas supplied to the gas seal portion, a first sensor provided in the seal gas supply pipe and configured to detect the supply pressure of the seal gas located downstream of the pressure regulating valve and upstream of the connecting pipe, and a second sensor provided inside of the casing at opposite side of the gas seal portion through a labyrinth seal and configured to detect an internal pressure of the casing, and a control part configured to control the pressure regulating valve according to the supply pressure of the seal gas and the internal pressure of the casing, and the control part is configured not to change an opening degree of the pressure regulating valve when a differential pressure between the supply pressure of the seal gas and the internal pressure of the casing is equal to or more than a predetermined lower limit threshold value, or less than a predetermined upper limit threshold value, and the control part is configured to increase the opening degree of the pressure regulating valve to a target opening degree when the differential pressure is less than the predetermined lower limit threshold value, and the connecting pipe has a pipe inner diameter larger than that of the seal gas supply pipe, and the control part is configured to increase the opening degree of the pressure regulating valve by multiplying the opening degree by a coefficient a which is more than 1 when a change amount over time of the pressure of the seal gas supplied from the gas seal device to the gas seal portion is equal to or more than a predetermined threshold value so that the pressure regulating valve is opened to be larger than the target opening degree.

As described above, the pipe diameter of the connecting pipe is formed to be thicker than that of the seal gas supply pipe. Therefore, the pressure loss in the connecting pipe can be suppressed. In addition, since it is only necessary to thicken the connecting pipe, an increase in cost can be suppressed.

Meanwhile, in the gas seal device on an upstream side of the connecting pipe, it is not necessary to make the seal gas supply pipe thick. Therefore, in the gas seal device, it is not necessary to set a thickness of the seal gas supply pipe for each rotary machine system, and the seal gas supply pipe may be formed at a constant thickness.

Moreover, when the supply pressure of the seal gas supplied by the gas seal device is increased, the opening degree of the pressure regulating valve is temporarily increased. Therefore, a flow rate of the seal gas is increased, and responsiveness when the supply pressure is changed can be enhanced. Additionally, when the increase in the supply pressure of the seal gas supplied by the gas seal device is stopped, the temporary increase in the opening degree of the pressure regulating valve is stopped, and thus a usage amount of the seal gas can be suppressed.

Further, in a rotary machine system of a second aspect of the present invention, a joint portion of which an inner diameter is gradually reduced from the connecting pipe side may be provided at at least one of a space between the connecting pipe and the seal gas supply pipe and a space between the connecting pipe and a port connection hole through which the connecting pipe is connected to the casing, in the first aspect.

Accordingly, a cross-sectional area of a flow path of the seal gas can be suppressed from being varied discontinuously between the connecting pipe and the seal gas supply pipe and between the connecting pipe and the port connection hole, and thus the pressure loss can be suppressed.

Further, in a rotary machine system of a third aspect of the present invention, the pipe inner diameter of the connecting pipe in the first or second aspect may be formed so that a pressure loss in the connecting pipe is equal to or less than a predetermined value which is set in advance.

In this way, the pressure loss in the connecting pipe can be reliably suppressed.

Further, in a rotary machine system of a fourth aspect of the present invention, the rotary machine system further includes a vent connected to the casing and configured to discharge the seal gas in the casing, and a third sensor provided in the vent and configured to detect a vent pressure inside of the vent.

[Advantageous Effects of Invention]

According to the above-described rotary machine system, it is possible to minimize a pipe diameter for supplying a seal gas to a gas seal portion while reliably suppressing a backflow of the seal gas, thereby suppressing the piping cost, the design cost and the designing effort for supplying the seal gas.

[Brief Description of Drawings]

Fig. 1 is a view showing a schematic constitution of a rotary machine system with a compressor as an example of a rotary machine.

Fig. 2 is a view showing a constitution of a gas seal portion provided at the compressor in a first embodiment.

Fig. 3 is a view showing a constitution of a modified example of a connection pipe portion in the first embodiment.

Fig. 4 is a view showing a constitution of a gas seal portion provided at the compressor in a second embodiment.

Fig. 5 is a view showing a change in an opening degree of a pressure regulating valve in the second embodiment.

[Description of Embodiments]

Hereinafter, embodiments for implementing a rotary machine system will be described with reference to the accompanying drawings. However, the present invention is not limited by these embodiments. The present invention is solely defined by the appended claims.

(First embodiment)

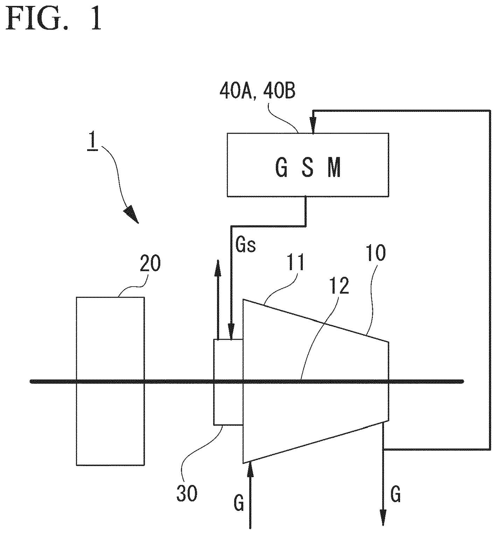

Fig. 1 is a view showing a schematic constitution of a rotary machine system with a compressor as an example of a rotary machine.
As shown in Fig. 1, a rotary machine system 1 includes a compressor (rotary machine) 10, a turbine 20 as a drive source for driving the compressor 10, and a gas seal module (GSM: gas seal device) 40A for supplying a seal gas Gs to the compressor 10.
The compressor 10 is, for example, a centrifugal compressor and includes a rotary shaft 12 and a compression part (not shown) such as an impeller, which rotates integrally with the rotary shaft 12 and compresses a gas G serving as a working fluid, in a casing 11. A gas seal portion 30 is provided in a portion on a suction side of the compressor 10 in which the rotary shaft 12 passes through an end of the casing 11 and protrudes outward.

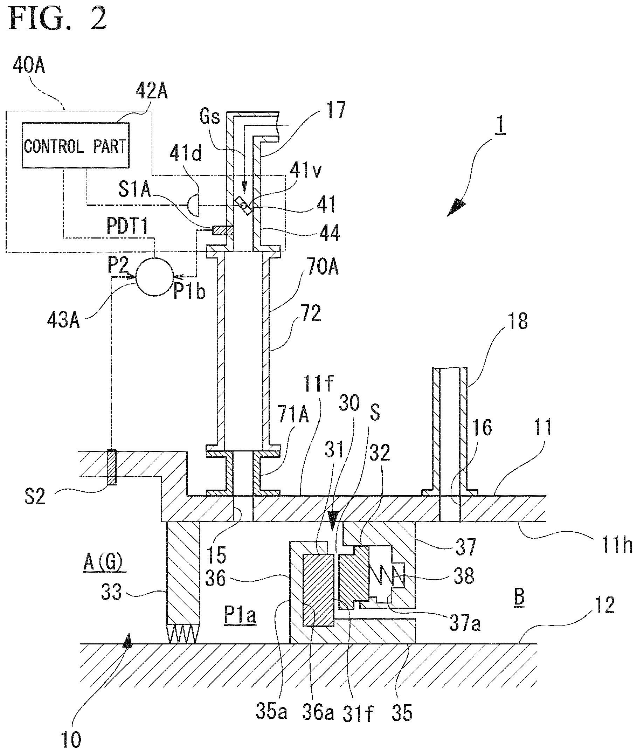

Fig. 2 is a view showing a constitution of the gas seal portion 30 provided at the compressor 10 in a first embodiment.
As shown in Fig. 2, the gas seal portion 30 includes a rotary ring 31, a stationary ring 32 and a labyrinth seal 33 on an inside of the machine.
The rotary ring 31 is provided integrally with the rotary shaft 12 on an outer circumferential portion of the rotary shaft 12. A cylindrical shaft sleeve 35 is fixed to the outer circumferential portion of the rotary shaft 12. A holder portion 36 extending toward an outer circumference side is provided at an end 35a of the shaft sleeve 35 on the inside A (left side in Fig. 2) of the machine. In the holder portion 36, a holding recess 36a for holding the rotary ring 31 is provided on an outside B (right side in Fig. 2) of the machine.
The rotary ring 31 is formed in an annular shape and fitted and held in the holding recess 36a. In the rotary ring 31, a spiral groove (not shown) is provided on a surface 31f thereof facing the stationary ring 32.
The stationary ring 32 is provided on a casing 11 side. A shaft insertion hole 11h through which an end of the rotary shaft 12 passes through an inside and an outside of the casing 11 is provided in the casing 11.
An annular retainer 37 is provided on an inner circumferential surface of the shaft insertion hole 11h. A holding recess 37a for holding the stationary ring 32 is provided on the inside A of the machine in the retainer 37. In the holding recess 37a, the stationary ring 32 is provided to be slidable in an axial direction of the rotary shaft 12. A coil spring 38 for biasing the stationary ring 32 toward the inside A of the machine is provided in the holding recess 37a between the stationary ring 32 and the retainer 37.
The rotary ring 31 and the stationary ring 32 are provided to face each other in the axial direction of the rotary shaft 12. The stationary ring 32 is pressed toward the rotary ring 31 by the coil spring 38.
A seal gas supply port 15 which opens on the inner circumferential surface of the shaft insertion hole 11h is provided in the casing 11. The seal gas supply port 15 is formed between the rotary ring 31 and the labyrinth seal 33 on the inside of the machine in the axial direction of the rotary shaft 12.
A seal gas supply path 17 is connected to the seal gas supply port 15. The seal gas supply path 17 supplies a part of the gas G compressed by the compressor 10 as the seal gas Gs from a discharge side of the compressor 10 to the seal gas supply port 15.
A vent discharge port 16 which opens on the inner circumferential surface of the shaft insertion hole 11h is provided in the casing 11. The vent discharge port 16 is formed closer to the outside B of the machine than the rotary ring 31 in the axial direction of the rotary shaft 12.

A vent (chimney; vent portion) 18 is connected to the vent discharge port 16. The seal gas Gs flowing out from the gas seal portion 30 is discharged to an outside via the vent 18. In addition to the compressor 10, other devices are connected to the vent 18.

In such a gas seal portion 30, the stationary ring 32 and the rotary ring 31 abut on each other in a state in which the compressor 10 is stopped.

In a state in which the compressor 10 is operated, the seal gas Gs is introduced into a space between the shaft insertion hole 11h of the casing 11 and the rotary shaft 12 through the seal gas supply path 17 and the seal gas supply port 15. When the compressor 10 is operated and the rotary shaft 12 rotates, the seal gas Gs is introduced between the rotary ring 31 and the stationary ring 32 from an outer circumference side of the rotary ring 31 by the spiral groove formed on the surface 31f of the rotary ring 31. When the stationary ring 32 is pressed toward the outside B of the machine in the axial direction of the rotary shaft 12 against a biasing force of the coil spring 38 by a pressure of the seal gas Gs, a minute seal gap S is formed between the rotary ring 31 and the stationary ring 32. The seal gas Gs passes through the seal gap S and flows toward the outside B of the machine. In this manner, the seal gas Gs is caused to flow from the inside A of the machine toward the outside B thereof, and thus sealing between the rotary shaft 12 and the casing 11 is achieved.

Further, the seal gas Gs flows from the rotary ring 31 and stationary ring 32 side to the inside A of the machine through a space between the labyrinth seal 33 on the inside of the machine and the rotary shaft 12. As a result, foreign substances or the like are prevented from being introduced into the seal gap S between the rotary ring 31 and the stationary ring 32 from the inside A of the machine.

To prevent the seal gas Gs delivered into the casing 11 through the seal gas supply path 17 from flowing backward in the gas seal portion 30, the gas seal module 40A adjusts the pressure of the seal gas Gs to be higher than that of the inside A of the machine.

The gas seal module 40A includes a pressure regulating valve 41, a control part 42A which controls an opening degree of the pressure regulating valve 41, and a module pipe portion (seal gas supply pipe) 44 which is provided in the gas seal module 40A to form a part of the seal gas supply path 17.

The pressure regulating valve 41 is provided in the module pipe portion 44. The pressure regulating valve 41 includes a valve body 41v and a valve driving part 41d. The valve body 41v is provided in the seal gas supply path 17 and is driven by the valve driving part 41d to increase or decrease a flow path area of the seal gas supply path 17. The pressure regulating valve 41 adjusts a supply pressure P1b of the seal gas Gs supplied into the casing 11 through the seal gas supply path 17 by varying the opening degree of the valve body 41v by the valve driving part 41d. An operation of the valve driving part 41d is controlled by the control part 42A.

The control part 42A controls the valve driving part 41d of the pressure regulating valve 41 on the basis of the supply pressure P1b of the seal gas Gs and an internal pressure P2 of the machine.

The supply pressure P1b of the seal gas Gs is detected by a seal gas pressure sensor S1A provided in the seal gas supply path 17. The internal pressure P2 of the machine is detected by an internal pressure sensor S2 provided closer to the inside A of the casing 11 than the gas seal portion 30 and the labyrinth seal 33 on an inside of the machine.

The seal gas pressure sensor S1A and the internal pressure sensor S2 are connected to a differential pressure gauge 43A. The differential pressure gauge 43A detects a differential pressure PDT1(=P1b-P2) in the machine between the supply pressure P1b of the seal gas Gs supplied into the casing 11 through the seal gas supply path 17 and the internal pressure P2 of the machine of the casing 11. A signal indicating the detected differential pressure PDT1 in the machine is transmitted to the control part 42A.

During an operation of the compressor 10, the control part 42A obtains the differential pressure PDT1 in the machine which is detected by the differential pressure gauge 43A at predetermined time intervals.

When the detected differential pressure PDT1 in the machine is equal to or more than a predetermined lower limit threshold value, or less than a predetermined upper limit threshold value, the supply pressure P1b of the seal gas Gs is sufficiently higher than the internal pressure P2 of the machine, and thus the operation is continued as it is without changing the opening degree of the pressure regulating valve 41.

Further, when the detected differential pressure PDT1 in the machine is less than the predetermined lower limit threshold value, the supply pressure P1b of the seal gas Gs is not sufficiently higher than the internal pressure P2 of the machine, and thus the opening degree of the pressure regulating valve 41 is increased. Then, the supply pressure P1b of the seal gas Gs supplied into the casing 11 through the seal gas supply path 17 is increased. As a result, the differential pressure PDT1 in the machine between the supply pressure P1b of the seal gas Gs and the internal pressure P2 in the machine is increased.

Here, when the differential pressure PDT1 in the machine is less than the predetermined lower limit threshold value, the opening degree of the pressure regulating valve 41 is increased, but an amount of change in the opening degree may be, for example, a preset amount of change in the opening degree according to a magnitude of the differential pressure PDT1 in the machine. Also, the opening degree of the pressure regulating valve 41 may be increased by a predetermined amount in every operation process.

Further, when the detected differential pressure PDT1 in the machine exceeds the predetermined upper limit threshold value, the supply pressure P1b of the seal gas Gs is excessively higher than the internal pressure P2 of the machine, and the flow rate of the seal gas flowing into the inside A of the machine is increased, and thus the flow rate of the gas G which is compressed by the compressor 10 is reduced. Therefore, the control part 42A reduces the opening degree of the pressure regulating valve 41.

As described above, by adjusting the opening degree of the pressure regulating valve 41 by the control part 42A on the basis of the supply pressure P1b of the seal gas Gs which is detected by the seal gas pressure sensor S1A and the internal pressure P2 of the machine which is detected by the internal pressure sensor S2, a pressure P1a of the seal gas Gs in the gas seal portion 30 inside the casing 11 can always be kept higher than the internal pressure P2 of the machine.

Accordingly, a backflow of the seal gas Gs from the gas seal portion 30 toward the inside A of the compressor 10 can be prevented.

Here, in the seal gas supply path 17, a port connection hole (connection hole portion) 71A is provided on an outer circumferential surface of the casing 11 and communicates with the seal gas supply port 15 and one or more connecting pipes 72 (the example of Fig. 2 shows one, and they are connected to each other when there are a plurality) are provided at a connection pipe portion 70A which connects the gas seal module 40A and the casing 11 of the compressor 10.

One end of the connecting pipe 72 is connected to the port connection hole 71A, and the other end is connected to the module pipe portion 44 of the gas seal module 40A.

The connecting pipe 72 has a pipe diameter larger than that of the module pipe portion 44, that is, the inner diameter thereof is larger. More specifically, in the connecting pipe 72, the pressure loss in the connecting pipe 72 is equal to or lower than a predetermined value which is set in advance.

The pressure loss $\Delta P$ in the connecting pipe 72 is expressed by the following Equation (1).
[Math. 1]

$$\Delta P = \lambda \cdot \frac{L}{D} \cdot \frac{\rho v^2}{2} \qquad \cdots (1)$$

In Equation (1), $\lambda$ is a friction loss coefficient, L is a length of the connecting pipe 72, D is an inner diameter of the connecting pipe 72, $\rho$ is a density of the seal gas Gs, and v is the average flowing velocity of the seal gas Gs.

Further, a cross-sectional area S of the connecting pipe 72 is

$$S = \pi D^2/4 \cdots (2),$$

and assuming that m is a volume flow rate,

$$v = m/S \cdots (3).$$

From Equations 2 and 3,

$$v = 4m/D^2 \cdots (4).$$

When Equation (4) is substituted into Equation (1), it is expressed by the following Equation (5), and the pressure loss $\Delta P$ is inversely proportional to a fifth power of the inner diameter D of the connecting pipe.
[Math. 2]

$$\Delta P = \lambda \cdot \frac{L}{D} \cdot \frac{\rho}{2}\left(\frac{4m}{\pi D^2}\right)^2$$

$$= \lambda \cdot \frac{L}{D} \cdot \frac{\rho}{2}\left(\frac{16m^2}{\pi^2 D^4}\right)$$

$$= \lambda \cdot \frac{L\rho(16m^2)}{2\pi^2} \cdot \frac{1}{D^5} \qquad \cdots (5)$$

That is, the pressure loss $\Delta P$ in the connecting pipe 72 is as shown in Equation (5). Therefore, based on Equation (5), the inner diameter D of the connecting pipe 72 is set so that the pressure loss $\Delta P$ in the connecting pipe 72 becomes a predetermined value or less which is set in advance.

The connecting pipe 72 has a straight tubular shape in Fig. 2 but is actually appropriately bent to avoid interference with various devices arranged around the compressor 10. Also, a length of the connecting pipe 72 is determined according to an installation interval between the compressor 10 and the gas seal module 40A and may have a range of, for example, 20 to 30 m.

According to the rotary machine system 1 described above, the inner diameter of the connecting pipe 72 is formed larger than that of the seal gas supply path 17 on the gas seal module 40A side. Therefore, the pressure loss in the connecting pipe 72 can be suppressed. Further, since only the connecting pipe 72 needs to be thickened, it is possible to suppress an increase in cost.

Meanwhile, in the gas seal module 40A on an upstream side of the connecting pipe 72, it is not necessary to make the module pipe portion 44 thick. Therefore, in the gas seal module 40A, it is not necessary to set a thickness of the module pipe portion 44 for each rotary machine system 1, and the module pipe portion 44 may be formed at a constant thickness. As a result, the gas seal module 40A can be formed as a unit with high versatility, and design effort and a design cost thereof can be suppressed. Also, since it is not necessary to make the module pipe portion 44 thick, cost reduction and downsizing of the gas seal module 40A can be achieved.

Accordingly, the piping cost, the design cost and the design effort of the pipe for supplying the seal gas can be suppressed while the backflow of the seal gas is suppressed.

(Modified example of first embodiment)

In the first embodiment, an inner diameter of the connecting pipe 72 is set to be larger than that of the seal gas supply path 17 on the gas seal module 40A side. Additionally, a cross-sectional area of a flow path is varied discontinuously at a connection portion between the connecting pipe 72 and the module pipe portion 44 and a connection portion between the connecting pipe 72 and the port connection hole 71A.

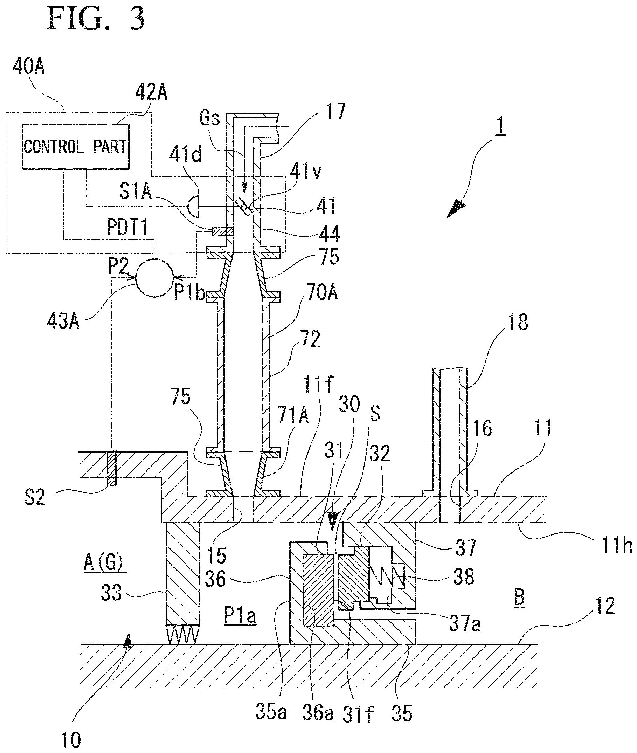

Meanwhile, as shown in FIG. 3, a joint pipe 75 may be provided at at least one of a space between the connecting pipe 72 and the module pipe portion 44 and a space between the connecting pipe 72 and the port connection hole 71A. An inner diameter of the joint pipe (joint portion) 75 is gradually reduced from the connecting pipe 72 side thereof toward the module pipe portion 44 and the port connection hole 71A, and a step is smoothly formed between an inner circumferential surface of the connecting pipe 72 and an inner circumferential surface of the module pipe portion 44. Accordingly, it is possible to suppress the discontinuous change in the cross-sectional area of the flow path in the seal gas supply path 17 and thus to suppress the pressure loss.

(Second embodiment)

Next, a second embodiment of the rotary machine system will be described. The second embodiment to be described is different from the first embodiment in only a control method of the gas seal module 40A, and the constitution of the rotary machine system 1 is common to the first embodiment. Therefore, the same reference numerals are provided for the elements common to those of the first embodiment, and the description thereof will be omitted.

As shown in Fig. 1, the rotary machine system 1 of the embodiment includes a compressor 10, a turbine 20 and a gas seal module (gas seal device) 40B.

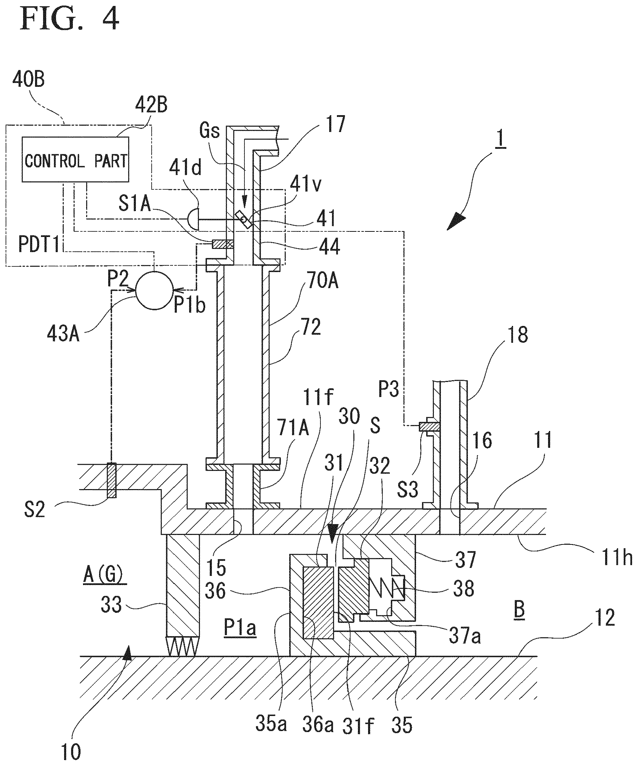

Fig. 4 is a view showing a constitution of a gas seal portion 30 provided at the compressor 10 in a second embodiment.

As shown in Fig. 4, the compressor 10 includes a rotary shaft 12 and a compressing part (not shown) in a casing 11. In a suction side of the compressor 10, a gas seal portion 30 is provided in a portion in which the rotary shaft 12 passes through an end of the casing 11 and protrudes outward.

To prevent the seal gas Gs delivered into the casing 11 through the seal gas supply path 17 from flowing backward in the gas seal portion 30, the gas seal module 40B adjusts a pressure of the seal gas Gs to be higher than that in an inside A of the machine.

The gas seal module 40B includes a pressure regulating valve 41, a control part 42B which controls an opening degree of the pressure regulating valve 41 and a module pipe portion 44 which is provided in the gas seal module 40B to form a part of the seal gas supply path 17.

The control part 42B controls a valve driving part 41d of the pressure regulating valve 41 on the basis of a pressure P1a of the seal gas Gs in the gas seal portion 30, an internal pressure P2 of the machine and the vent pressure P3 in the vent 18.

A supply pressure P1b of the seal gas Gs is detected by a seal gas pressure sensor S1A provided in the seal gas supply path 17. An internal pressure P2 of the machine is detected by an internal pressure sensor S2 provided closer to the inside A of the machine of the casing 11 than the gas seal portion 30 and a labyrinth seal 33 on the inside of the machine. A vent pressure P3 is detected by a vent pressure sensor S3 provided in a vent 18.

The seal gas pressure sensor S1A and the internal pressure sensor S2 are connected to a differential pressure gauge 43A. The differential pressure gauge 43A detects a differential pressure PDT1(=P1b-P2) in the machine between the supply pressure P1b of the seal gas Gs supplied into the casing 11 through the seal gas supply path 17 and the internal pressure P2 of the machine of the casing 11. A signal indicating the detected differential pressure PDT1 in the machine is transmitted to the control part 42B.

During an operation of the compressor 10, the control part 42B obtains the differential pressure PDT1 in the machine which is detected by the differential pressure gauge 43A at predetermined time intervals which is set in advance.

When the detected differential pressure PDT1 in the machine is equal to or more than a predetermined lower limit threshold value and less than a predetermined upper limit threshold value, the supply pressure P1b of the seal gas Gs is sufficiently higher than the internal pressure P2 of the machine, and thus the operation is continued as it is without changing the opening degree of the pressure regulating valve 41.

When the detected differential pressure PDT1 in the machine is less than the predetermined lower limit threshold value, the supply pressure P1b of the seal gas Gs is not sufficiently higher than the internal pressure P2 of the machine, and thus the opening degree of the pressure regulating valve 41 is increased. Then, the supply pressure P1b of the seal gas Gs supplied into the casing 11 through the seal gas supply path 17 is increased. As a result, the differential pressure PDT1 in the machine between the supply pressure P1b of the seal gas Gs and the internal pressure P2 of the machine is increased.

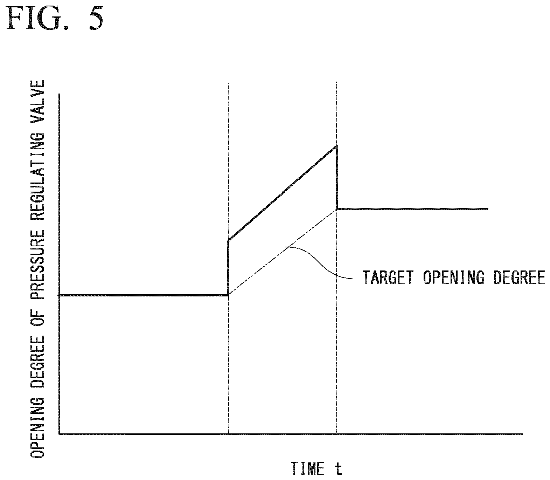

Fig. 5 is a view showing a change in the opening degree of the pressure regulating valve in the second embodiment.

Here, in order to monitor an increase amount of a supply flow rate of the seal gas Gs, the control part 42B calculates an increase amount of the vent pressure P3 in the vent 18 detected by the vent pressure sensor S3 at predetermined time intervals. The control part 42B may calculate an increase amount of the supply pressure P1b of the seal gas Gs instead of the vent pressure P3.

As shown in FIG. 5, when the increase amount of the vent pressure P3 exceeds a predetermined threshold value, the opening degree of the pressure regulating valve 41 is multiplied by a coefficient $\alpha$ of 1 or more, and the pressure regulating valve 41 is opened to be larger than a target opening degree. According to the present invention, it is the change amount over time of the pressure P1b of the seal gas Gs which is, similar to how it is described for the vent pressure P3, decisive to increase the opening degree of the pressure regulating valve.

Then, when the increase amount of the vent pressure P3 is reduced below a predetermined threshold value, the multiplication of the opening degree of the pressure regulating valve 41 by the coefficient $\alpha$ of 1 or more is stopped, and the opening degree of the pressure regulating valve 41 is adjusted to the target opening degree.

Further, when the detected differential pressure PDT1 in the machine exceeds a predetermined upper limit threshold value, the supply pressure P1b of the seal gas Gs is excessively higher than the internal pressure P2 of the machine, and therefore a flow rate of the seal gas flowing into the inside A of the machine is increased, and the flow rate of the gas G which is compressed by the compressor 10 is reduced. Therefore, the control part 42B reduces the opening degree of the pressure regulating valve 41.

As described above, by adjusting the opening degree of the pressure regulating valve 41 by the control part 42B on the basis of the supply pressure P1b of the seal gas Gs which is detected by the seal gas pressure sensor S1A and the internal pressure P2 of the machine which is detected by the internal pressure sensor S2, the pressure P1a of the seal gas Gs in the gas seal portion 30 inside the casing 11 is always kept higher than the internal pressure P2 of the machine. Accordingly, backflow of the seal gas Gs from the gas seal portion 30 toward the inside A of the compressor 10 is suppressed.

According to the rotary machine system 1 described above, the pressure loss in the connecting pipe 72 can be suppressed by forming the connecting pipe 72 to be thicker than the seal gas supply path 17 on the gas seal module 40 B side. However, responsiveness when the supply pressure P1b of the seal gas Gs supplied by the gas seal module 40B is changed is lowered because the connecting pipe 72 is formed to be thick. Therefore, in the embodiment, when the supply pressure P1b of the seal gas Gs supplied by the gas seal module 40B is increased, the opening degree of the pressure regulating valve 41 is caused to be temporarily increased. Accordingly, the flow rate of the seal gas Gs is increased, and the responsiveness when the supply pressure P1b is changed can be enhanced. Additionally, when the increase in the supply pressure P1b of the seal gas Gs supplied by the gas seal module 40B is stopped, the increase in the opening degree of the pressure regulating valve 41 is stopped, and thus a usage amount of the seal gas Gs can be suppressed.

(Other embodiments)

In addition, the rotary machine system is not limited to each of the above-described embodiments described with reference to the drawings, and various modifications are conceivable within the technical scope thereof.

For example, the constitution of the gas seal portion 30 can be appropriately changed.

Further, although the gas seal portion 30 has been provided on the suction side of the compressor 10, it is not limited thereto. The gas seal portion 30 may be provided on a discharge side of the compressor 10. In this case, the same operational effects as those in the above-described embodiments can be obtained.

In addition, for example, the overall constitution of the compressor 10 and the rotary machine system 1 may have any types.

The rotary machine according to the present invention is only limited by appended claim 1. In general, the present invention is solely defined by the appended claims.

[Industrial Applicability]

According to the above-described rotary machine system, it is possible to surely suppress the backflow of the seal gas, thereby suppressing the piping cost, the design cost and the designing effort for supplying the seal gas.

[Reference Signs List]

    1 Rotary machine system
    10 Compressor
    11 Casing
    11h Shaft insertion hole
    12 Rotary shaft
    15 Seal gas supply port
    16 Vent discharge port
    17 Seal gas supply path
    18 Vent
    20 Turbine

30 Gas seal portion
31 Rotary ring
31f Surface
32 Stationary ring
33 Labyrinth seal on inside of the machine
35 Shaft sleeve
35a End
36 Holder portion
36a Holding recess
37 Retainer
37a Holding recess
38 Coil spring
40A, 40B Gas seal module
41 Pressure regulating valve
41d Valve driving part
41v Valve body
42A, 42B Control part
43A Differential pressure gauge
44 Module pipe portion
70A Connection pipe portion
71A Port connection hole
72 Connecting pipe
75 Joint pipe (joint portion)
A Inside of machine
B Outside of machine
G Gas
Gs Seal gas
S Seal gap
S1A Seal gas pressure sensor
S2 Internal pressure sensor
S3 Vent pressure sensor

**Claims**

1.  A rotary machine system (1) comprising: a rotary machine (10) having a gas seal portion (30); a gas seal device (40B) connected to the rotary machine (10) and configured to supply a seal gas (Gs) to the gas seal portion (30); and a connecting pipe (72) configured to connect the gas seal portion (30) and the gas seal device (40B),
    wherein the rotary machine (10) comprises a casing (11) through which a working fluid flows, a rotary shaft (12) configured to pass through an inside and an outside of the casing (11) and provided to be rotatable, and the gas seal portion (30) provided between the casing (11) and the rotary shaft (12) and configured to seal the working fluid by the seal gas (Gs) having a supply pressure (P1b) higher than that of the working fluid in the casing (11),
    the gas seal device (40B) comprises a seal gas supply pipe (17) through which the seal gas (Gs) delivered to the connecting pipe (72) flows, a pressure regulating valve (41) provided in the seal gas supply pipe (17) and configured to adjust the supply pressure (P1b) of the seal gas (Gs) supplied to the gas seal portion (30), a first sensor (S1A) provided in the seal gas supply pipe (17) and configured to detect the supply pressure (P1b) of the seal gas (Gs) located downstream of the pressure regulating valve (41) and upstream of the connecting pipe (72), and a second sensor (S2) provided inside of the casing (11) at opposite side of the gas seal portion (30) through a labyrinth seal (33) and configured to detect an internal pressure (P2) of the casing (11), and a control part (42B) configured to control the pressure regulating valve (41) according to the supply pressure (P1b) of the seal gas (Gs) and the internal pressure (P2) of the casing (11),
    wherein the control part (42B) is configured not to change an opening degree of the pressure regulating valve (41) when a differential pressure (PDT1) between the supply pressure (P1b) of the seal gas (Gs) and the internal pressure (P2) of the casing (11) is equal to or more than a predetermined lower limit threshold value, or less than a predetermined upper limit threshold value, and the control part (42B) is configured to increase the opening degree of the pressure regulating valve (41) to a target opening degree when the differential pressure (PDT1) is less than the predetermined lower limit threshold value;
    wherein the connecting pipe (72) has a pipe inner diameter larger than that of the seal gas supply pipe (17); and wherein the control part (42B) is configured to increase the opening degree of the pressure regulating valve (41) by multiplying the opening degree by a coefficient $\alpha$, which is more than 1 when a change amount over time of the pressure (P1b) of the seal gas (Gs) supplied from the gas seal device (40B) to the gas seal portion (30) is equal to or more than a predetermined threshold value so that the pressure regulating valve (41) is opened to be larger than the target opening degree.

2.  The rotary machine system according to claim 1, wherein a joint portion (75) of which an inner diameter is gradually reduced from the connecting pipe (72) side is provided at at least one of a space between the connecting pipe (72) and the seal gas supply pipe (17) and a space between the connecting pipe (72) and a port connection hole (71) through which the connecting pipe (72) is connected to the casing (11).

3.  The rotary machine system according claims 1 or 2, wherein the pipe inner diameter of the connecting pipe (72) is formed so that a pressure loss in the connecting pipe (72) is equal to or less than a predetermined value which is set in advance.

4.  The rotary machine system according to any one of claims from 1 to 3,
    wherein the rotary machine system (1) further comprises:

a vent (18) connected to the casing (11) and configured to discharge the seal gas (Gs) in the casing (11), and
a third sensor (S3) provided in the vent (18) and configured to detect a vent pressure (P3) inside of the vent (18).

**Patentansprüche**

1.  Rotationsmaschinensystem (1), umfassend:

    eine Rotationsmaschine (10), die einen Gasdichtungsabschnitt (30) hat;
    eine Gasdichtungsvorrichtung (40B), die mit der Rotationsmaschine (10) verbunden und ausgestaltet ist, um dem Gasdichtungsabschnitt (30) ein Dichtgas (Gs) zuzuführen; und ein Verbindungsrohr (72), das ausgestaltet ist, um den Gasdichtungsabschnitt (30) und die Gasdichtungsvorrichtung (40B) zu verbinden, wobei die Rotationsmaschine (10) umfasst:

    ein Gehäuse (11), durch das ein Arbeitsfluid strömt, eine Drehwelle (12), die ausgestaltet ist, um durch das Innere und Äußere des Gehäuses (11) zu gelangen und rotierbar vorgesehen ist, und den Gasdichtungsabschnitt (30), der zwischen dem Gehäuse (11) und der Drehwelle (12) vorgesehen und ausgestaltet ist, um das Arbeitsfluid durch das Dichtgas (Gs) mit einem Zuführdruck (P1b) abzudichten, der höher ist als der des Arbeitsfluids in dem Gehäuse (11), wobei die Gasdichtungsvorrichtung (40B) umfasst:

    ein Dichtgaszuführrohr (17), durch welches das dem Verbindungsrohr (72) zugeführte Dichtgas (Gs) strömt, ein Druckregulierventil (41), das in dem Dichtgaszuführrohr (17) vorgesehen und derart ausgestaltet ist, dass es den Zuführdruck (P1b) des dem Gasdichtungsabschnitt (30) zugeführten Dichtgases (Gs) einstellt, einen ersten Sensor (S1A), der in dem Dichtgaszuführrohr (17) vorgesehen und ausgestaltet ist, um den Zuführdruck (P1b) des Dichtgases (Gs) zu erfassen, wie er stromabwärts des Druckregulierventils (41) und stromaufwärts des Verbindungsrohrs (72) herrscht, und einen zweiten Sensor (S2), der im Inneren des Gehäuses (11) an der gegenüberliegenden Seite des Gasdichtungsabschnitt (30) über eine Labyrinthdichtung (33) vorgesehen und ausgestaltet ist, um einen Innendruck (P2) des Gehäuses (11) zu erfassen, und ein Steuerteil (42B), das ausgestaltet ist, um das Druckregulierventil (41) in Abhängigkeit von dem Zuführdruck (P1b) des Dichtgases (Gs) und des Innendrucks (P2) des Gehäuses (11) zu steuern, wobei das Steuerteil (42B) derart ausgestaltet ist, dass es einen Öffnungsgrad des Druckregulierventils (41) nicht ändert, wenn ein Differenzdruck (PDT1) zwischen dem Zuführdruck (P1b) des Dichtgases (Gs) und dem Innendruck (P2) des Gehäuses (11) gleich oder größer ist als ein vorbestimmter unterer Grenzschwellwert, oder geringer ist als ein vorbestimmter oberer Grenzschwellwert und das Steuerteil (42B) ausgestaltet ist, um den Öffnungsgrad des Druckregulierventils (41) hin zu einem Zielöffnungsgrad zu vergrößern, wenn der Differenzdruck (PDT1) geringer ist als der vorbestimmte untere Grenzschwellwert;
wobei das Verbindungsrohr (72) einen Rohrinnendurchmesser hat, der größer ist als der des Dichtgaszuführrohrs (17); und
wobei das Steuerteil (42B) ausgestaltet ist, um den Öffnungsgrad des Druckregulierventils (41) zu vergrößern durch Vervielfachen des Öffnungsgrads mit einem Koeffizienten α, der größer ist als 1, wenn ein Änderungsbetrag des Drucks (P1b) über die Zeit des von der Gasdichtungsvorrichtung (40B) zu dem Gasdichtungsabschnitt (30) zugeführten Dichtgases (Gs) gleich oder größer ist als ein vorbestimmter Schwellwert, sodass das Druckregulierventil (41) derart geöffnet wird, dass es größer ist als der Zielöffnungsgrad.

2.  Rotationsmaschinensystem nach Anspruch 1, wobei ein Verbindungsabschnitt (75), von dem ein Innendurchmesser von der Seite des Verbindungsrohrs (72) her allmählich verringert wird, bei einem Raum zwischen dem Verbindungsrohr (72) und dem Dichtgaszuführrohr (17) und/oder einem Raum zwischen dem Verbindungsrohr (72) und einem Öffnungsverbindungsloch (71), durch das das Verbindungsrohr (72) mit dem Gehäuse (11) verbunden ist, vorgesehen ist.

3.  Rotationsmaschinensystem nach Anspruch 1 oder 2, wobei der Rohrinnendurchmesser des Verbindungsrohrs (72) derart ausgebildet ist, dass ein Druckverlust in dem Verbindungsrohr (72) gleich oder kleiner ist als ein vorbestimmter Wert, der zuvor eingestellt wurde.

4. Rotationsmaschinensystem nach einem der Ansprüche 1 bis 3, wobei das Rotationsmaschinensystem (1) ferner umfasst:

einen Austritt (18), der mit dem Gehäuse (11) verbunden und ausgestaltet ist, um das Dichtgas (Gs) in dem Gehäuse (11) auszubringen, und einen dritten Sensor (S3), der in dem Austritt (18) vorgesehen und ausgestaltet ist, um einen Austrittsdruck (P3) im Inneren des Austritts (18) zu erfassen.

## Revendications

1. Système de machine rotative (1) comprenant : une machine rotative (10) comportant une partie d'étanchéité aux gaz (30) ; un dispositif d'étanchéité aux gaz (40B) raccordé à la machine rotative (10) et configuré pour distribuer un gaz d'étanchéité (Gs) à la partie d'étanchéité aux gaz (30) ; et un tuyau de raccordement (72) configuré pour raccorder la partie d'étanchéité aux gaz (30) et le dispositif d'étanchéité aux gaz (40B),

dans lequel la machine rotative (10) comprend un boîtier (11) par lequel un fluide de travail circule, un arbre rotatif (12) configuré pour traverser un intérieur et un extérieur du boîtier (11) et prévu pour pouvoir tourner, et la partie d'étanchéité aux gaz (30) disposée entre le boîtier (11) et l'arbre rotatif (12) et configurée pour étancher vis-à-vis du fluide de travail par le gaz d'étanchéité (Gs) ayant une pression d'alimentation (P1b) supérieure à celle du fluide de travail dans le boîtier (11),

le dispositif d'étanchéité aux gaz (40B) comprend un tuyau d'alimentation en gaz d'étanchéité (17) par lequel le gaz d'étanchéité (Gs) délivré jusqu'au tuyau de raccordement (72) circule, une vanne de régulation de pression (41) disposée dans le tuyau d'alimentation en gaz d'étanchéité (17) et configurée pour régler la pression d'alimentation (P1b) du gaz d'étanchéité (Gs) distribué jusqu'à la partie d'étanchéité aux gaz (30), un premier capteur (S1A) situé dans le tuyau d'alimentation en gaz d'étanchéité (17) et configuré pour détecter la pression d'alimentation (P1b) du gaz d'étanchéité (Gs) situé en aval de la vanne de régulation de pression (41) et en amont du tuyau de raccordement (72), et un deuxième capteur (S2) situé à l'intérieur du boîtier (11) sur un côté à l'opposé de la partie d'étanchéité aux gaz (30) à travers un joint en labyrinthe (33) et configuré pour détecter une pression interne (P2) du boîtier (11), et une partie de commande (42B) configurée pour commander la vanne de régulation de pression (41) en fonction de la pression d'alimentation (P1b) du gaz d'étanchéité (Gs) et de la pression interne (P2) du boîtier (11),

dans lequel la partie de commande (42B) est configurée pour ne pas modifier un degré d'ouverture de la vanne de régulation de pression (41) lorsqu'une pression différentielle (PDT1) entre la pression d'alimentation (P1b) du gaz d'étanchéité (Gs) et la pression interne (P2) du boîtier (11) est supérieure ou égale à une valeur seuil de limite inférieure prédéfinie, ou inférieure à une valeur seuil de limite supérieure prédéfinie, et la partie de commande (42B) est configurée pour augmenter le degré d'ouverture de la vanne de régulation de pression (41) jusqu'à un degré d'ouverture cible lorsque la pression différentielle (PDT1) est inférieure à la valeur seuil de limite inférieure prédéfinie ;

dans lequel le tuyau de raccordement (72) présente un diamètre intérieur de tuyau supérieur à celui du tuyau d'alimentation en gaz d'étanchéité (17) ; et dans lequel la partie de commande (42B) est configurée pour augmenter le degré d'ouverture de la vanne de régulation de pression (41) en multipliant le degré d'ouverture par un coefficient $\alpha$, qui est supérieur à 1 lorsqu'une importance de modification dans le temps de la pression (P1b) du gaz d'étanchéité (Gs) distribué du dispositif d'étanchéité aux gaz (40B) à la partie d'étanchéité aux gaz (30) est supérieure ou égale à une valeur seuil prédéfinie de manière que la vanne de régulation de pression (41) soit ouverte à un degré supérieur à celui du degré d'ouverture cible.

2. Système de machine rotative selon la revendication 1, dans lequel une partie de jonction (75) dont un diamètre intérieur est progressivement diminué depuis le côté tuyau de raccordement (72) est située en au moins un espace entre le tuyau de raccordement (72) et le tuyau d'alimentation en gaz d'étanchéité (17) ou un espace entre le tuyau de raccordement (72) et un orifice de connexion (71) par lequel le tuyau de raccordement (72) est raccordé au boîtier (11).

3. Système de machine rotative selon la revendication 1 ou 2, dans lequel le diamètre intérieur de tuyau du tuyau de raccordement (72) est formé de manière qu'une perte de pression dans le tuyau de raccordement (72) soit inférieure ou égale à une valeur prédéfinie qui est fixée à l'avance.

4. Système de machine rotative selon l'une quelconque des revendications 1 à 3, où le système de machine rotative comprend, en outre :

un évent (18) raccordé au boîtier (11) et configuré pour décharger le gaz d'étanchéité (Gs) dans le boîtier (11), et un troisième capteur (S3) situé dans l'évent (18) et configuré pour détecter une pression d'évent (P3) à l'intérieur de l'évent (18).

# FIG. 1

40A, 40B

1

G S M

Gs

20

11

10

12

30

G

G

# FIG. 2

# FIG. 3

# FIG. 4

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3979091 B

- JP 2012082765 B